# EUROPEAN PATENT SPECIFICATION

(11) **EP 3 657 052 B1**
(45) Date of publication and mention of the grant of the patent: **24.05.2023**
(21) Application number: 19206220.6
(22) Date of filing: 30.10.2019
(51) Int. Cl.: F16K 1/20, B65G 69/18, F16K 1/36, F16K 27/02, B01L 1/00, G01M 3/28, B65B 55/02

(54) **IMPROVED ACTIVE/PASSIVE DIAPHRAGM FOR A MATERIAL TRANSFER VALVE**
VERBESSERTES AKTIVES/PASSIVES MEMBRAN FÜR EIN MATERIALÜBERTRAGUNGSVENTIL
DIAPHRAGME ACTIF/PASSIF AMÉLIORÉ POUR UNE SOUPAPE DE TRANSFERT DE MATÉRIAU

(30) Priority: 31.10.2018 IT 201800009945
(43) Date of publication of application: 27.05.2020
(73) Proprietor: FEDEGARI AUTOCLAVI SPA, I-27010 Albuzzano (PV) (IT)
(72) Inventor: FEDEGARI, Paolo, 7505 CELERINA/SCHLARIGNA (CH); LIBERALI, Silvano, 27100 PAVIA (IT)
(74) Representative: Rossi, Ugo

(56) References cited:
- CH-A5- 695 425
- US-A- 5 783 156
- US-A- 5 884 660
- US-A1- 2015 053 881
- US-A1- 2017 247 132
- US-B1- 6 591 662

## Description

The present invention relates to an improved active diaphragm for a valve, in particular for a valve with a hinged or butterfly or disc aperture.

In some technological sectors such as, for example, the pharmaceutical sector, it is necessary to perform some processes within classified areas in totally sterile conditions. In this context the need often arises to move parts from a first work station to a second work station, without compromising the sterility of the parts themselves.

By way of non-limiting example, the need is considered below to transfer caps from an autoclave (first work station) to a filling machine (second work station).

In more detail, within the filling machine, the caps are used for closing bottles, once they have been filled with the related product. As the absolute sterility of the product must be guaranteed, the caps themselves must be sterilised of the use. The sterilisation takes place in an autoclave that is generally a separate machine from the filling machine.

US 2017/247132 A1, US 2015/053881 A1, CH 695 425 A5, US 5783156 A and US 5884660 A disclose known active diaphragms. In particular CH 695 425 A5 discloses an active diaphragm according to the preamble of claim 1.

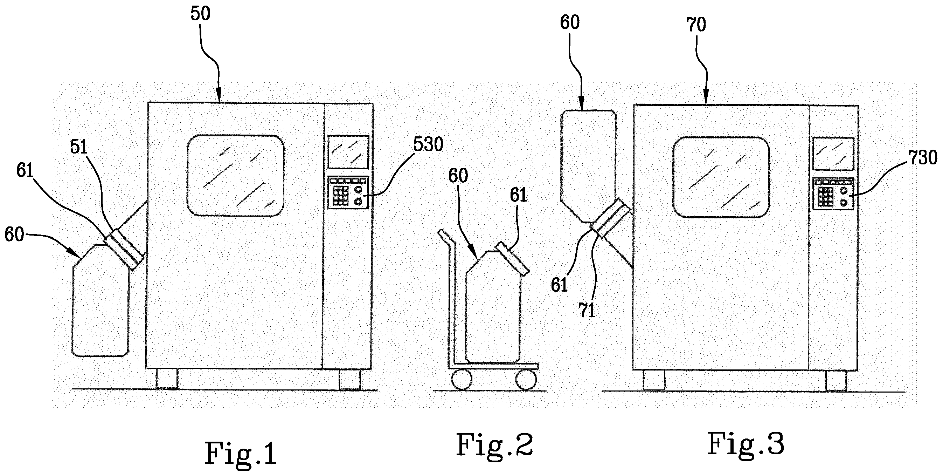

The known solutions will now be described with reference to figures 1 to 18, in which 50 indicates an autoclave, 60 indicates a transfer tank and 70 indicates a filling machine.

In a known way, the caps 80 are loaded into a basket inside the autoclave 50.

The latter, as well as the doors through which the materials are loaded from the outside, comprises an unloading door 51 closed by a butterfly valve also known as a "diaphragm" or "disc" valve. Such door, which is usually circular, comprises a motorised diaphragm (known as the active diaphragm 52) which is adapted to rotate through about 90° to pass from a position in which it closes the door 51 to a position in which it frees the passage of the door itself.

For the movement of caps 80 still in a known way, appropriate transfer tanks 60 are used. These tanks have a door 61 adapted to be connected to the discharge door 51 of the autoclave 50 and very similar to it. A difference between the discharge door 51 of the autoclave and that of the tank is that in the latter the diaphragm is not motorised (therefore known as a passive diaphragm 62). The passive diaphragm 62 like the active one 52 is also able to rotate between a closing position and an opening position of the tank 60.

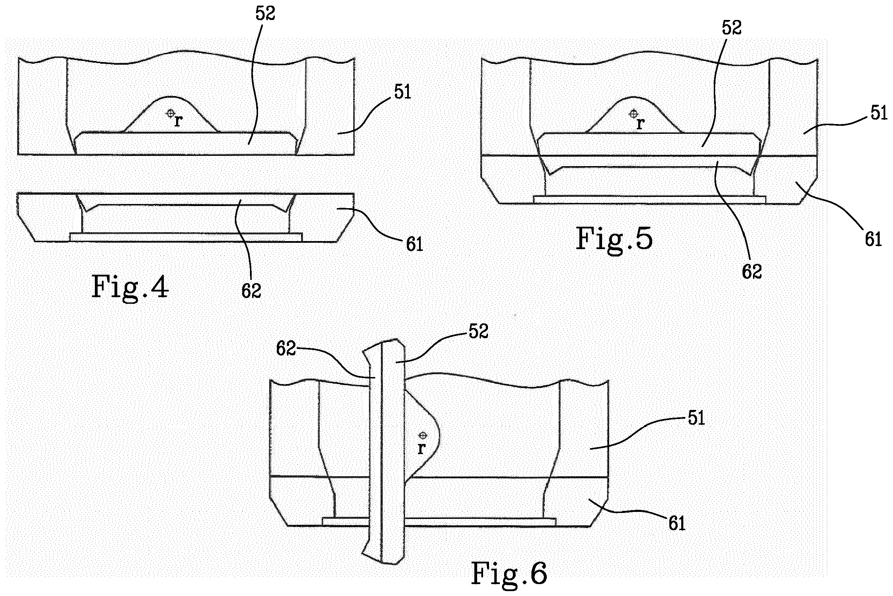

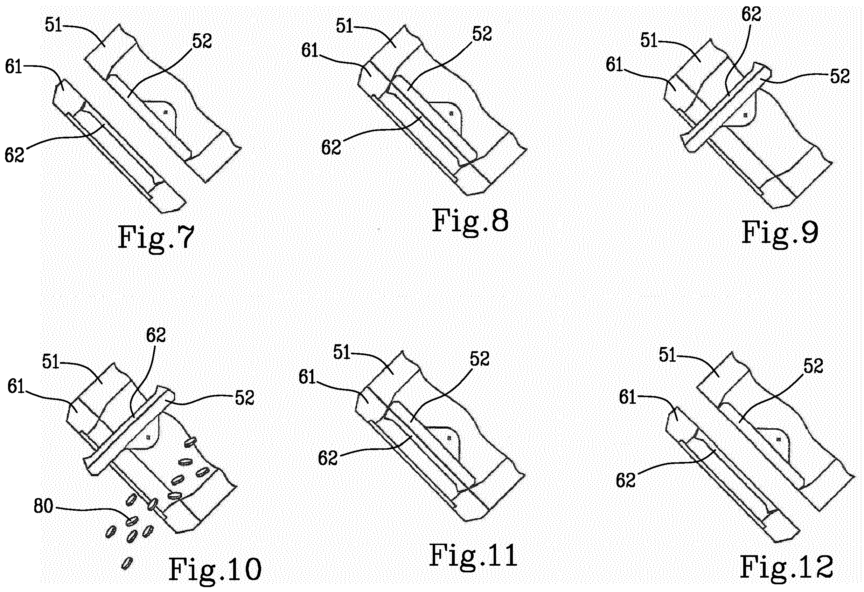

When the caps 80 have been loaded into the basket of the autoclave 50, the door 61 of the tank is placed alongside the unloading door 51 of the autoclave (see figures 4 and 7) and subsequently the two doors 51 and 61 are connected to one another (figures 5 and 8). Such connection must guarantee the seal, which implies total isolation between the inside of the autoclave and the external environment. Once the connection has been made, the active diaphragm 52 is rotated, drawing with it the passive diaphragm 62 in the opening position (figures 6 and 9). In this way the inside of the tank 60 and the inside of the autoclave 50 create a single work space.

The sterilisation cycle performed by the autoclave 50 is therefore able to sterilise not only what is inside the autoclave 50 (typically the caps 80), but also the inside of the tank 60 and the exposed surfaces of the two diaphragms, active 52 and passive 62.

At the end of the sterilisation cycle the caps 80 are therefore unloaded from the basket and, passing through the two coupled doors, they are collected in the tank 60 (figure 10).

At this point the active diaphragm 52 is brought into the closing position, so as to restore the hermetic separation between the autoclave 50 and the tank 60 and between both of these devices and the external environment (figure 11).

The hermetic seal provided by the door 61 of the tank 60 allows the latter to be disconnected from the autoclave 50 (figure 12) and moved to other stations of the productive cycle, e.g. a storage station or to the filling machine 70 that will be described below.

The machine 70 comprises a loading door 71, like the unloading door 51 described above for the autoclave 50.

When the caps 80 must be loaded into the filling machine 70, the door 61 of the tank is placed alongside the loading door 71 (figure 13) and subsequently the two doors 61 and 71 are connected to one another (figure 14). Such connection must guarantee the seal, which implies total isolation between the inside of the filling machine 70 and the external environment. Once the connection has been made, the active diaphragm 72 is rotated, drawing with it the passive diaphragm 62 in the opening position (figure 15), so that the inside of the tank 60 and the inside of the filling machine 70 create a single work space.

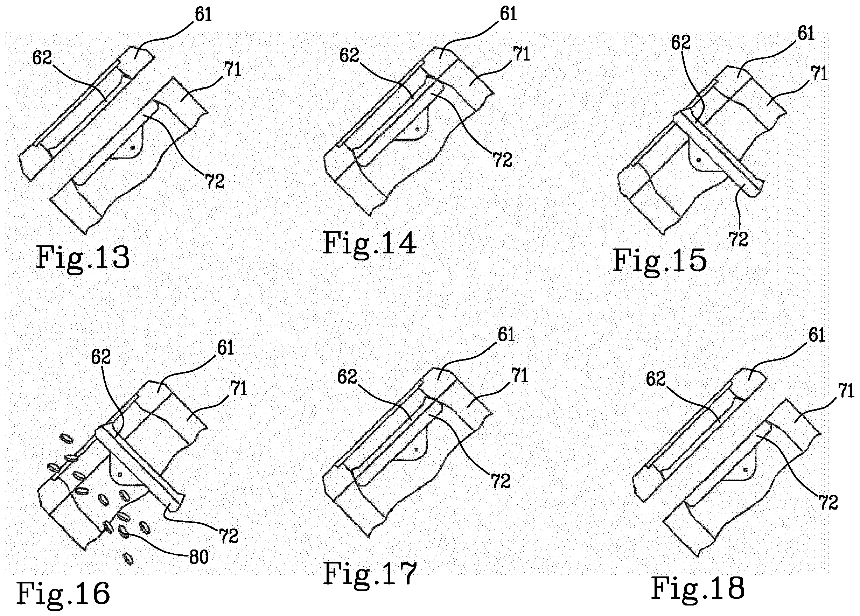

The caps 80 are therefore gradually unloaded from the tank 60 and, passing through the two coupled doors, they are loaded into the filling machine 70 (figure 16).

At this point the active diaphragm 72 is brought into the closing position, so as to restore the hermetic separation between the filling machine 70 and the tank 60 and between both of these devices and the external environment (figure 17). The hermetic seal provided by the doors 61 with 62 and 71 with 72 allows the tank 60 to be finally disconnected from the filling machine 70 (figure 18).

Although being widely appreciated, the system just described is not free from drawbacks. In particular, as a person skilled in the art can easily understand, an extremely delicate point is the coupling between the active diaphragms 52 and 72 and the passive diaphragm 62. In fact, such coupling is extremely delicate from the point of view of maintaining total sterility within the work spaces.

However, in such system the functionality of the gaskets can be compromised, e.g. in the case in which a foreign body, even a small one, remains trapped between the gaskets, or in which a gasket is damaged. In that case, a gap would open which would place in communication the work space with a contaminated zone comprised between the two diaphragms. Such zone is not intended to be sterilised, but must simply be sealed in order to confine the contaminants that it houses inside it.

As a person skilled in the art can easily understand, a functionality of compromised or limited gaskets causes a less severe problem in the event in which the transfer tank 60 is coupled to the autoclave 50. In fact, in that case, once the doors 51 and 61 are open, the sterilisation cycle is performed and all the exposed surfaces are made sterile. The presence of a gap between the gaskets would therefore expose to sterilisation, although in an undesired and inefficient way, also the contaminated zone comprised between the two diaphragms.

The case is very different in which the functionality of the gaskets is compromised or limited when the transfer tank 60 is coupled to the filling machine 70. In fact, in that case the gap would allow the passage of contaminants between the contaminated zone and the work space, which must remain sterile.

The main problem of known solutions is that it is not possible to have any control over the effective functionality of the gaskets.

Naturally, a problem that implies the contamination of the work space would only be detected a posteriori and would cause the destruction of the entire product batch.

The object of the invention in the first and second embodiments is therefore that of at least partially overcoming the drawbacks, reported above in relation to the prior art.

More specifically, a task of the invention is that of making available an improved active diaphragm that allows control over the effective functionality of the relative gaskets. Another task of the invention is that of making available an improved active diaphragm that maintains the functionality of active diaphragms of the known type.

The aim and duties indicated above are reached by an active diaphragm according to claim 1, an active door according to claim 6 and a sterile transfer system according to claim 11.

Further advantageous characteristics are described in the dependent claims.

The characteristics and further advantages of the invention will emerge from the description, given below, of some embodiments shown by way of non-limiting example with reference to the attached drawings.
- figure 1 schematically represents a front view of an autoclave and a transfer tank connected to each other;
- figure 2 schematically represents a front view of a transfer tank;
- figure 3 schematically represents a front view of a filling machine and a transfer tank connected to each other;
- figure 4 schematically represents a cross section of the autoclave doors and of a tank alongside each other;
- figure 5 schematically represents a cross section of the autoclave doors and of a tank connected to each other in the closed configuration;
- figure 6 shows the doors of figure 5 in the open configuration;
- figures 7 to 12 schematically represent the subsequent steps of unloading sterile caps from an autoclave to a transfer tank;
- figures 13 to 18 schematically represent the subsequent steps of loading sterile caps from a transfer tank to a filling machine;

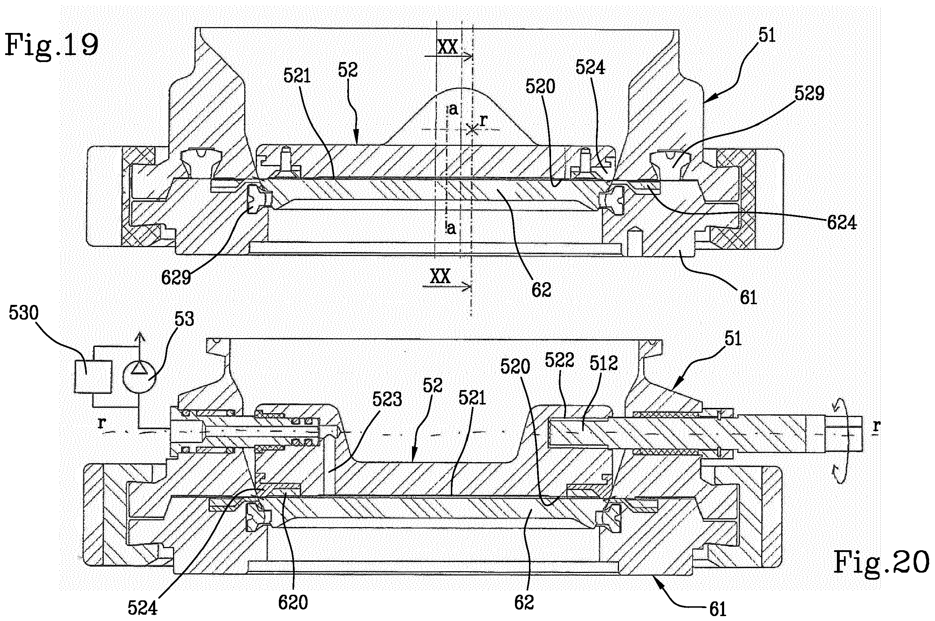

- figure 19 represents a first embodiment of the invention in a view similar to the one of figure 5;
- figure 20 represents a section along the line XX-XX of figure 19;

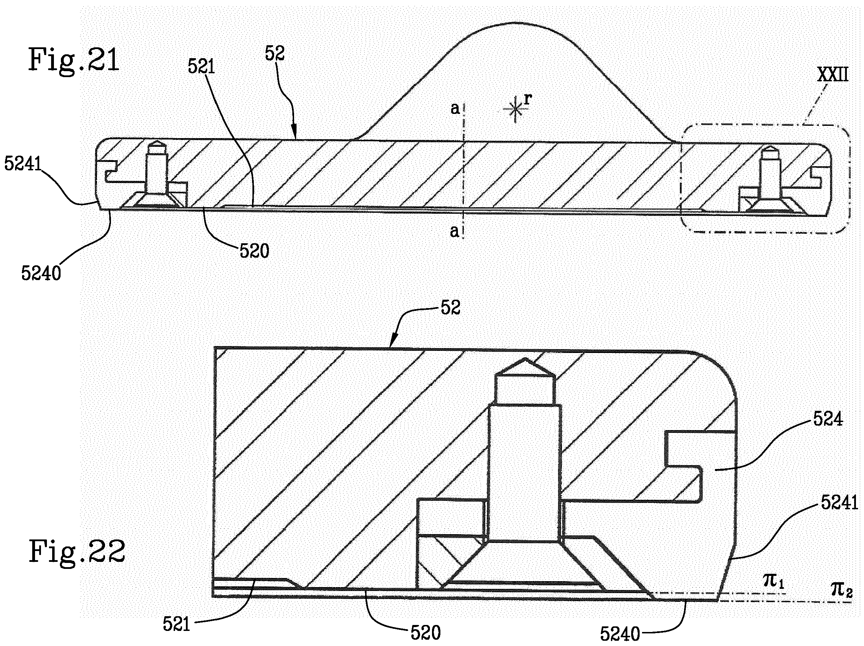

- figure 21 represents a detail of figure 19;
- figure 22 represents an enlarged view of the detail indicated with XXII in figure 21;

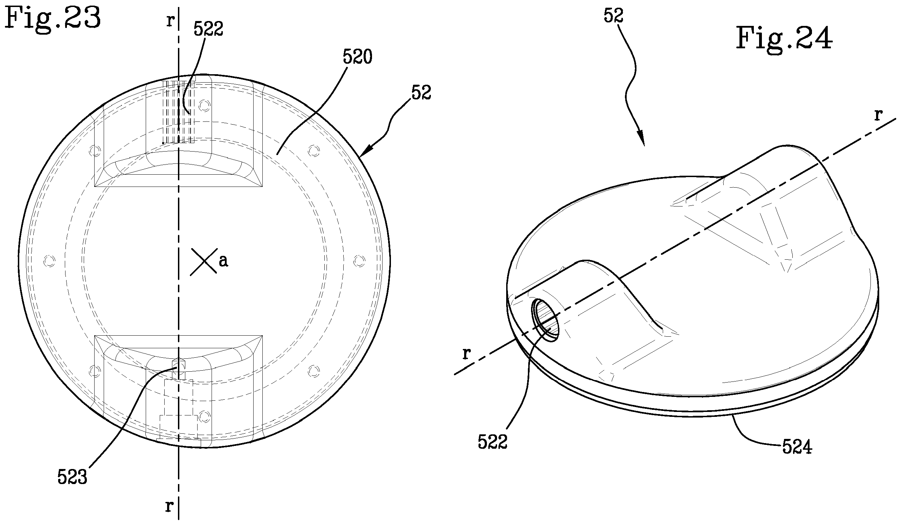

- figure 23 represents an axial view of an active diaphragm according to the invention; and
- figure 24 represents a perspective view of an active diaphragm according to the invention.

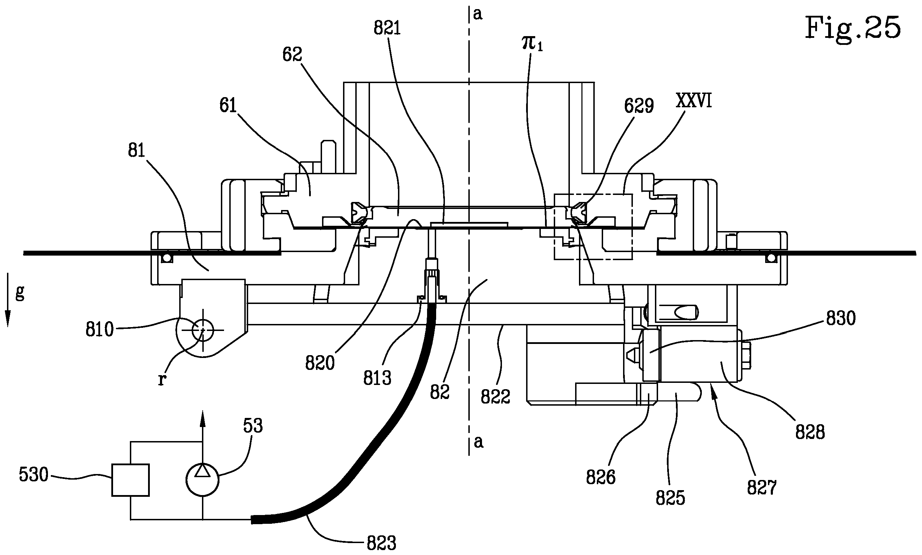

- figure 25 represents a cross sectional view of a second embodiment of an active diaphragm according to the invention;

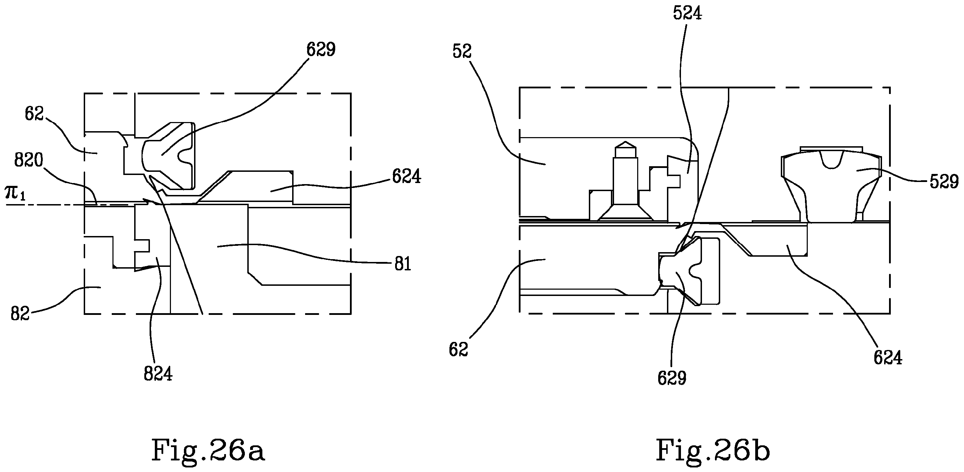

- figure 26a represents an enlarged view of the detail indicated with XXVI in figure 25, in relation to the step of transferring sterile material between the tank and the filling machine;
- figure 26b represents the gasket of figure 19, in relation to the step of transferring sterile material from the tank to the sterilisation autoclave;

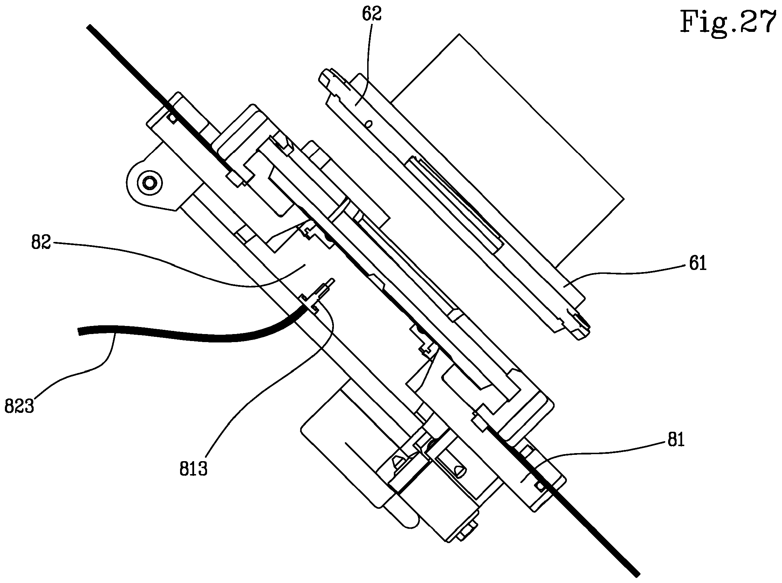

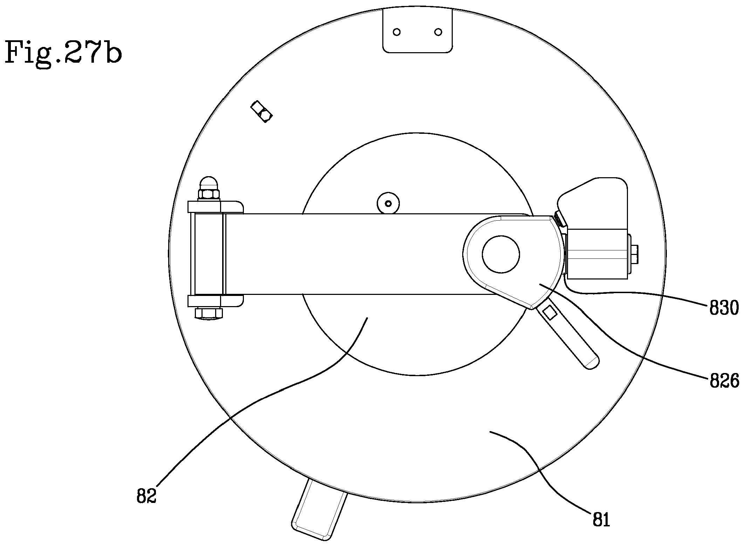

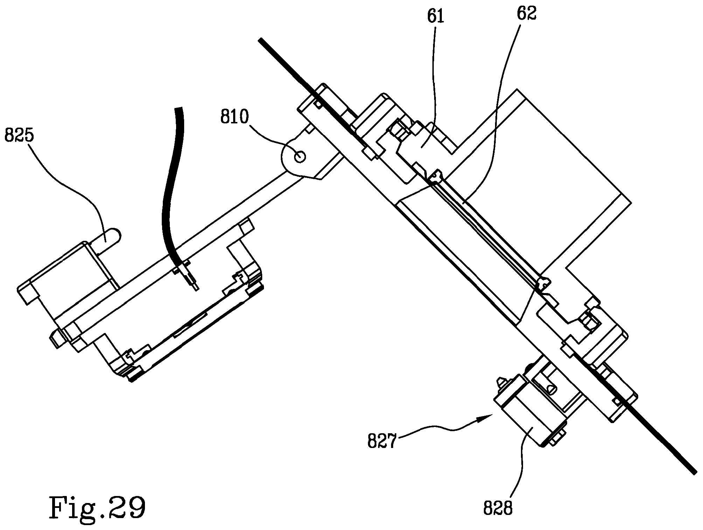

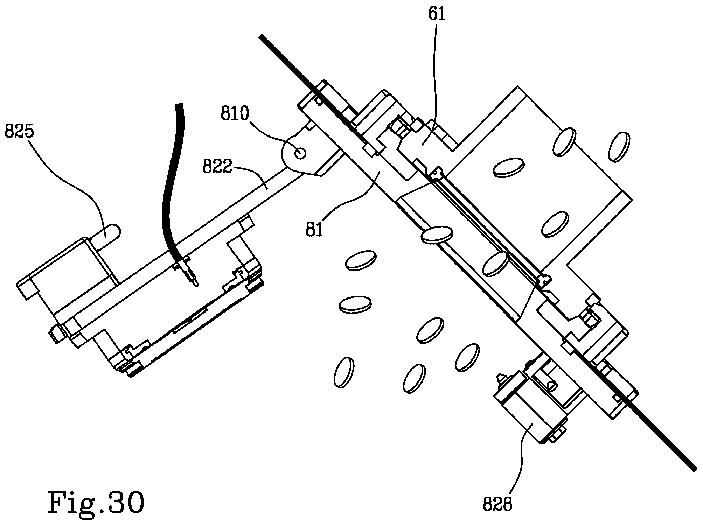

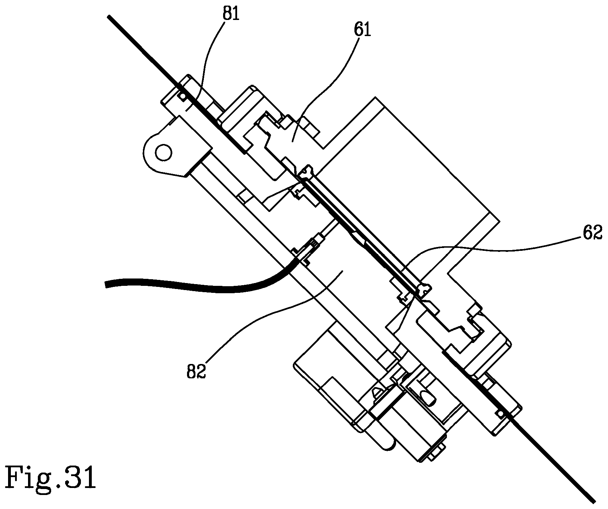

- figures 27 to 32 schematically represent the subsequent steps of loading sterile caps from a transfer tank to a filling machine in the second embodiment of the active diaphragm according to the invention;

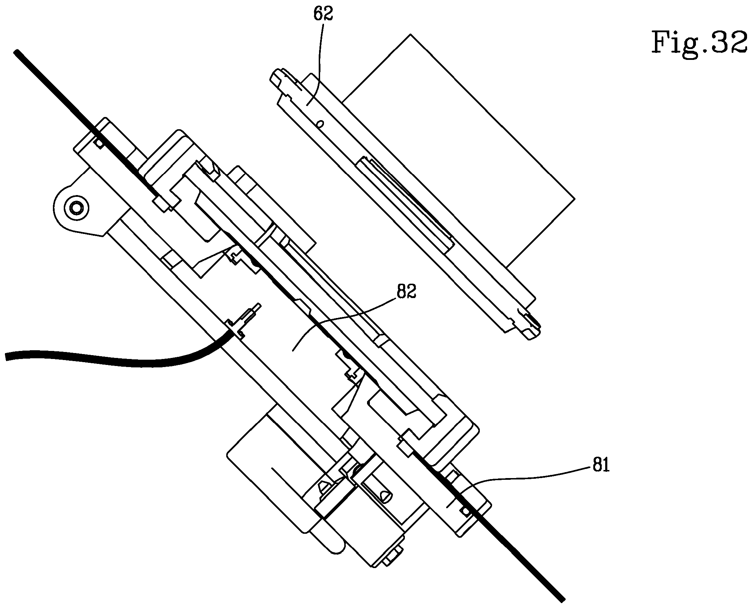

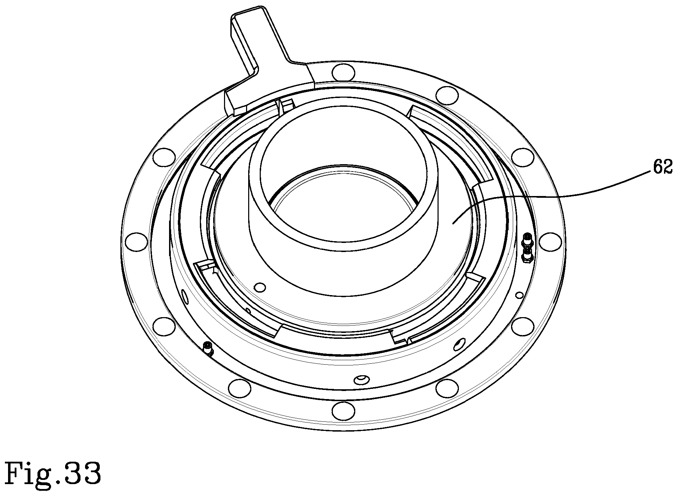

- figure 33 represents an external view of the active diaphragm of figure 32 in the closed configuration comprising manual opening means;

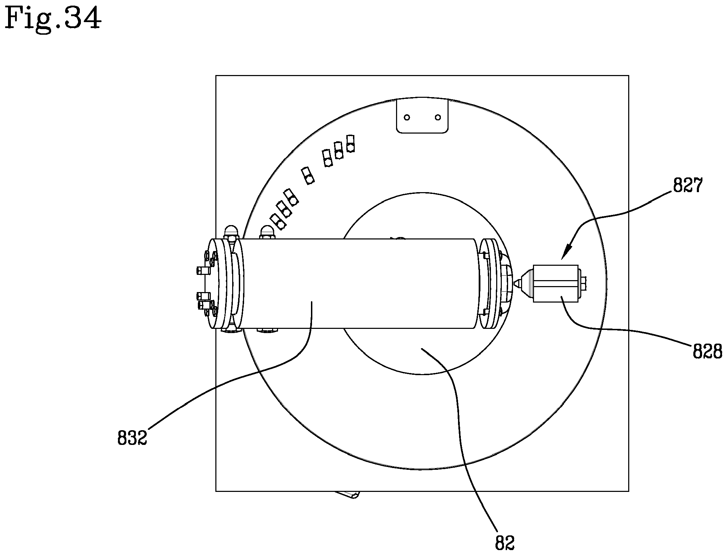

- figure 34 represents an axial view of the active diaphragm of figure 25 comprising automatic opening means.

With reference to the appended figures, 50 indicates an autoclave, 60 indicates a transfer tank and 70 indicates a filling machine. Both the autoclave 50 and the filling machine 70 according to the invention comprise a door, indicated with 51 and 71, respectively. Each of such doors, adapted to hermetically close the conduit at the end of which it is mounted, comprises a disc or diaphragm 52; 72. For convenience purposes, only the diaphragm 52 will be described in more detail below, as in the first embodiment the diaphragm 72 is exactly the same as it.

The active diaphragm 52 according to a first embodiment according to the invention defines:
- a support surface 520 arranged on π1;
- a geometric axis a substantially perpendicular to the plane π1; and
- an axis of rotation r substantially perpendicular to the plane π1;
and comprises:
- a hollow 521 comprised within the support surface 520;
- a means 522 for the transmission of a torque about the axis of rotation r; and
- a suction conduit 523 adapted to place in communication the hollow 521 with an aspirator 53 external to the diaphragm 52.

According to the invention, the diaphragm has a circular shape. See, for example, figure 23. In that case the geometric axis a is defined univocally. In the same way, it is however possible to define a geometric axis a also in any other case.

The axis of rotation r is parallel to the support surface 520 and to the plane π1 defined thereby.

Such axis r is also preferably distanced from the plane π1, in particular it is translated towards the inside of the door 51. Furthermore, according to some embodiments, the axis of rotation r is also translated with respect to the geometric axis a. According to the invention, the two axes a and r are askew with respect to each other. As will be described below in greater detail, these geometric solutions allow some functional advantages in the door 51.

Furthermore, in this first embodiment of the invention, the axis of rotation r passes inside the area A defined by the support surface 520 of the active diaphragm 52.

As described above, the active diaphragm 52 according to the first embodiment of the invention comprises a hollow 521 completely comprised within the support surface 520. In other words, the hollow 521 can be defined as a concave surface hollowed out within the body of the diaphragm 52, wherein the perimeter of the concave surface lies on the plane π1 and is completely comprised within the support surface 520.

In some examples, the hollow 521 occupies between 70% and 98% of the surface area of the active diaphragm 52 adapted to be coupled with the passive diaphragm. According to the invention, the hollow 521 occupies between 80% and 90% of such surface. In the embodiments shown in the appended figures, wherein the active diaphragm 52 has a circular shape, the support surface 520 assumes the shape of a circular crown whose internal circumference acts as the perimeter of the hollow 521. In other words, the hollow 521 occupies 100% of the internal surface area of the circular crown defined by the support surface 520, defining with its own concavity, a volume.

The means 522 for the transmission of torque allows the diaphragm 52 to be placed in rotation with respect to the door 51. In the embodiments shown in the appended figures, such means 522 assumes the shape of a hole with a grooved profile (see in particular figures 20, 23 and 24). Naturally, a person skilled in the art can easily choose another means for obtaining the same effect.

According to the invention, the suction conduit 523 is arranged at least partially along the axis r. As will be described below in more detail, such solution allows a simple connection to be obtained between the suction conduit 523 afforded in the diagram 52 and the aspirator 53. In fact, the connection must allow the rotation of the diaphragm 52 between the closing position and the opening position. The diaphragm 52 preferably comprises a peripheral gasket 524 adapted to define, in the non-deformed state, an axial support surface 5240, arranged on a plane π2 parallel to the plane π1 and distanced therefrom. In particular the plane π2 of the axial support surface 5240 is translated with respect to the plane π1 towards the outside of the door 51. In other words, the plane π2 and the axis of rotation r are on opposite sides of the plane π1.

Preferably, the support surfaces 520 and 5240 are flat (as illustrated in the figures). The fact that the axial support surface of the peripheral gasket 524 projects with respect to the support surface 520 of the diaphragm 52 allows the gasket itself to undergo a compression in the axial direction when the active diaphragm 52 is coupled to the passive diaphragm 62 of the tank. The compression of the peripheral gasket 524 is necessary in order to guarantee the correct functionality and therefore the seal. In particular, the seal between the two doors 51 ad 61 is also guaranteed by a gasket 529 inserted in a special hollow of the door 51. Such gasket 529 is activated by blowing compressed air onto the back of the hollow, once the contact between the doors 51 and 61 has been obtained. With its compression on the door 61, the activation of the gasket 529 guarantees the seal as well as the mechanical connection thanks to the friction force between the parts. At the end of the cycle, by removing the compressed air the gasket 529 returns independently into the rest situation allowing the separation between the doors 51 and 61.

The diaphragm preferably also comprises a peripheral gasket 524 adapted to define an at least partially radial support surface 5241. In the embodiments illustrated in the appended figures, the same peripheral gasket 524 defines both the axial support surface 5240 and the at least partially radial support surface 5241. Such solution allows greater constructive simplicity. However, as a person skilled in the art can easily understand, it is possible to provide two different peripheral gaskets, each dedicated to one of the two tasks. The peripheral gasket 524 is preferably made of elastomeric material and, even more preferably, of silicone-based elastomeric material. Such material, which allows an excellent sealing performance to be obtained, is also adapted to undergo the sterilisation cycles of the autoclave without being degraded. As described above, with reference to the first embodiment of the invention, the active diaphragm 72 of the filling machine is exactly the same as that described above. The elements comprised in the active diaphragm 72 are indicated in the figures with similar references to those used for the elements of the active diaphragm 52, with the only difference that the first figure is 7 instead of 5.

According to another aspect, the invention relates to an active door 51 or 71 for the hermetic closure of a conduit, typically the unloading conduit of the autoclave 50 or the loading conduit of the filling machine 70. Only the door 51 will be described in detail here and below, for convenience purposes, as the door 72 is exactly the same as it, with the only exception of the orientation with respect to the force of gravity (compare figures 1 and 3), however the orientation has no effect on the other technical characteristics described herein.

The active door 51 comprises a diaphragm 52 in one of the embodiments described above. Furthermore, the door 51 comprises a means for supporting the diaphragm 52 rotatably about the axis of rotation r. As can be seen in figures 19 and 20, such means can advantageously comprise removable pins adapted to rotatably support the diaphragm 52. The active door 51 also comprises a means 512 for transmitting a torque about the axis of rotation r; such means 512 must be adapted to cooperate with the means 522 present on the diaphragm 52. For example, one of the two pins that support the diaphragm 52, can be at least partially grooved, in a suitable way to be engaged in the hole with a grooved profile afforded on the diaphragm 52.

Furthermore, the active door 51 comprises a suction conduit 513 adapted to constitute an extension of the suction conduit 523 of the diaphragm 52. The suction conduit 513 is preferably arranged along the axis of rotation r, i.e. within one of the two pins 510 that support the diaphragm 52. Such solution allows the suction conduit 523 of the diaphragm 52 to be easily extended when the latter is at least partially arranged along the axis of rotation r. The door can also comprise an aspirator 53 connected to the suction conduit 513 of the door 51 and, through it, to the suction conduit 523 of the diaphragm 52. Preferably, the aspirator 53 also comprises a control circuit 530 adapted to measure the volume and/or the flow rate and/or the vacuum level of the fluid sucked by the aspirator 53.

As mentioned above, the diaphragm 52 preferably comprises a peripheral gasket 524 adapted to define an at least partially radial support surface 5241. In that case, the door 51 comprises an abutment surface adapted to define an at least partially radial support for the at least partially radial support surface 5241 of the diaphragm 52. The at least partially radial compression of the gasket 524 allows the hermetic closure of the door 51.

As mentioned above, the active door 71 of the filling machine is exactly the same as the one described above. The only difference between the two doors resides in the fact that the unloading door 51 of the autoclave is turned downwards, so as to advantageously exploit the force of gravity for unloading the caps 80. Otherwise, the loading door 71 of the filling machine is turned upwards, so as to be able to advantageously exploit the force of gravity for unloading the caps 80. The elements comprised in the active door 71 are indicated in the figures with similar references to those used for the elements of the door 51, with the only difference that the first figure is 7 instead of 5.

Finally, the invention relates to a sterile transfer system that comprises a first active door 51 or 71 and a second passive door 61 of a tank 60. Below, only the door 51 will continue to be considered, as the door 71 is exactly the same as the one described with reference to the first embodiment of the invention.

The active door 51 can be arranged according to any one of the embodiments described above. The passive door 61 is adapted to be mechanically connected to the active door 51 and comprises a passive diaphragm 62 adapted to hermetically close the passive door 61. The passive diaphragm 62 further comprises an abutment surface 620 adapted to define an axial support for the support surface 5240 of the gasket 524 of the diaphragm 52 of the active door 51.

The mechanical connection between the active door 51 and the passive door 61 allows a single conduit to be defined that acts as an unloading conduit for the autoclave 50 and as a loading conduit for the tank 60.

Such connection can take place with known systems that allow a hermetic seal separation to be obtained between the inside of the conduit and the external environment. Within the conduit thus obtained the coupling takes place between the active diaphragm 52 and the passive diaphragm 62, so as to form a single diaphragm for a single butterfly (or "disc") valve. In fact, in its subsequent rotations, the active diaphragm 52 draws with it also the passive diaphragm 62 causing the opening or closing of the conduit. As has been described above, according to some embodiments of the active diaphragm 52, the axis of rotation r is retracted with respect to the plane π1 and/or the axis of rotation r is decentred with respect to the geometric axis a of the diaphragm. Such particular geometric characteristics of the active diaphragm 52 allow, once the latter is rotated into the open position, the dimensions within the conduit to be minimised.

In the system according to the invention, when the gasket 524 of the active diaphragm 52 rests on the abutment surface 620, the space defined within the gasket 524 by the hollow 521 and by the suction conduits 523 and 513 is separated from the environment of the conduit. The activation of the aspirator 53 implies that within such space a certain degree of vacuum is created, so that the external pressure presses the two diaphragms 52 and 62 against each other. Although minimal, the distance between the plane π2 and the plane π2 allows the gasket to be compressed in the axial direction so as to work as best as possible.

Furthermore, the presence of a hollow 521 that substantially occupies all of the support surface allows greater efficiency, as the negative pressure for creating the vacuum is lower with respect to having a plurality of suction orifices and the vacuum is distributed more uniformly, thus allowing an improved coupling between the two diaphragms. The coupling between the two diaphragms 52 and 62 is therefore obtained through the suction of the fluid (typically air) contained between them. But the application of the suction does not only have the purpose of obtaining a mechanical connection between the two diaphragms. In fact, the presence of the control circuit 530 allows the full functionality of the gasket 524 to be verified at all times.

In fact, when the aspirator is activated, the control circuit 530 measures the volume and/or flow rate of the sucked fluid and/or the vacuum value and compares such measurement with a series of preloaded values. In the event in which a foreign body is trapped between the gasket 524 and the abutment surface 620, or also in the event in which the gasket 524 is damaged, the control circuit 530 would detect an abnormality. In fact, in that case the air present in the conduit would have free access through the gasket 524. Therefore, by way of example, the control circuit 530 would detect that the volume of fluid sucked exceeds the preloaded value and/or would detect that the flow rate of sucked fluid continues over time to maintain a higher value than the preloaded one and the vacuum level does not reach the set value.

As mentioned above, the sterile transfer system between the active door 51 of the autoclave and the passive door 61 of the tank 60 is exactly the same as the sterile transfer system between the active door 71 of the filling machine 70 and the passive door 61 of the tank 60 described in the first embodiment of the invention.

The only difference is still connected with the orientation of the active doors.

The system according to the invention therefore allows a seal failure of the gaskets 524 and 724 to be detected before this problem can affect the sterility of the batch of products being processed. In fact, in the event in which an abnormality is detected, it is possible to interrupt the cap 80 transfer procedure so as to verify the problem and possibly solve it. As already mentioned, according to the prior art, the problem connected with the malfunctioning of the gaskets is particularly significant in the event of transfer from the tank 60 to the filling machine 70. In fact, in that case, sterilisation cycles not being envisaged as would instead happen in the autoclave 50, the problem at the gasket 724 would imply contamination of the batch being processed. Figures 25 to 34 represent a second embodiment of the active diaphragm 82 present in the active door 81 of a filling machine 70 (the same as that described above).

Below is a description of the differences only with respect to the description of the first embodiment, while for the analogous technical features reference is to be made to the description of the first embodiment. Therefore, in the following description, the passive diaphragm 62 adapted to hermetically close the passive door 61 of the transfer tank 60 remains the same as the one described above, with reference to the first embodiment. Furthermore, what is described with reference to the active door 81 of the filling machine 70, is also applicable to the active door of the autoclave 50 described above.

Figure 25 represents a cross section of the doors of a transfer tank 60 and of a filling machine 70 connected to each other in a closed and sealed configuration.

In this second embodiment, the axis of rotation r is parallel to the support surface 820 and to the plane π1 defined thereby.

Such axis r is also preferably distanced from the plane π1, in particular it is translated towards the inside of the door 81.

The active diaphragm 82 according to the second embodiment of the invention defines:
- a support surface 820 arranged on a plane π1;
- a geometric axis a substantially perpendicular to the plane π1; and
- an axis of rotation r substantially perpendicular to the plane π1;
the diaphragm 82 comprises:
- a hollow 821 comprised within the support surface 820; and
- a suction conduit 823 adapted to place in communication the hollow 821 with an aspirator 83 external to the diaphragm 82.

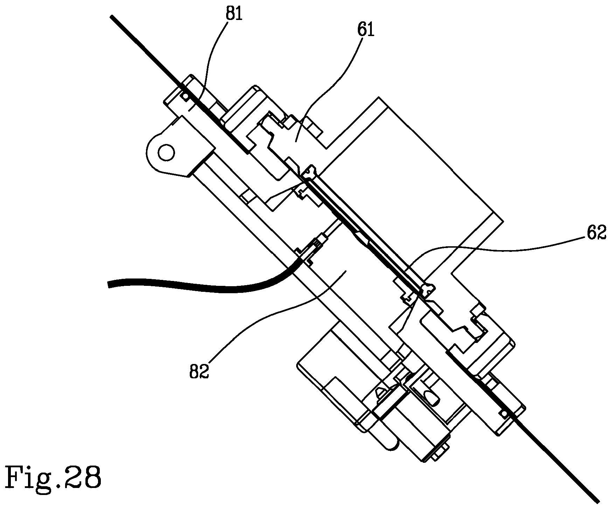

In the second embodiment of the invention, the axis of rotation r is present on the edge (i.e. tangent to the perimeter of the diaphragm 82) or outside the surface of the area A defined by the support surface 820 of the active diaphragm 82. When the active diaphragm 82 is coupled to the passive diaphragm 62 of the transfer tank 60, such solution allows a single diaphragm of a single "hinged" opening valve to be formed, as represented in figure 28, 29, 30 and 31 instead of a butterfly valve as described with reference to the first embodiment.

Such "hinged" opening form allows the contact of the materials being unloaded (elastomer caps, aluminium ring nuts, etc.) from the transfer tank 60 to the inside of the filling machine 70 with the perimeter surface of the respective diaphragms 62, 82 coupled (from the door 81), to be prevented and/or minimised, a situation to be prevented in sterile transfers. Such solution also makes it possible to create a larger unloading section allowing a better flow of sterilised material from the transfer tank 60 to the filling machine 70.

Preferably, the suction conduit 823 is substantially perpendicular to the plane π1.

The active door 82 comprises a suction conduit 813 adapted to constitute an extension of the suction conduit 823 of the diaphragm 82. The suction conduit 813 is preferably comprised of a hose. Such solution allows any type of rotating seals and other kinds of seals to be prevented, guaranteeing effective suction for the hollow 821 with the required degree of vacuum.

The door 81 can also comprise an aspirator 53 connected to the suction conduit 813 of the door 81 and, through it, to a suction conduit like the conduit 823 of the diaphragm 82 previously described. Preferably, the aspirator 53 also comprises a control circuit 530 adapted to measure the volume and/or the flow rate and/or the degree of vacuum of the fluid sucked by the aspirator 53.

In the second embodiment of the invention, the functionality of the vacuum for the coupling of the active disc 82 with the passive disc 62 remains unvaried. In that case, the vacuum between the diaphragms 62, 82, respectively of the tank 60 and the filling machine 70, is no longer performed through a conduit 513 present in the rotation shaft r of the active disc 52 but through a hose 813 connected directly to the active lens 82 with the advantages as above.

In the first and second embodiment of the invention, as illustrated in figures 26a and 26b, as well as the gasket 529 previously described (having axial movement), there is also a gasket 629 (similar to the gasket 529) that is activated by blowing compressed air onto the back of the hollow that contains it. Such activation of the gasket 629 allows radial movement that mechanically locks the disc 62 to the flange 61 guaranteeing the seal of the tank 60 during the transfer of sterile material. The gasket 629 is deactivated by removing compressed air, so as to enable the gasket 629 to return into the hollow allowing the opening and closing of the assembly of the active part 52,72,82 and the passive part 62.

In the second embodiment with a "hinged" opening there is preferably a safety system 827 configured to prevent the opening of the valve 62, 82 in the absence of the tank 60 that would cause the sterile inside of the filling machine to be placed in contact with the less controlled level of the external environment. The safety system 827 is comprised of a small pin 828 activated by a pneumatic piston. The pin 828 is movable along a substantially parallel direction to the plane π1 (when the active diaphragm 82 is in the closing position of the door 81 of the filling machine 70). When the pin 828 is retracted, it allows the opening of the active door 81, initiating the activities of unloading the material contained in the tank 60, only when the presence of the tank 60 and the reaching of the appropriate vacuum between the active disc 82 and the passive disc 62 can be guaranteed.

Once the active diaphragm 82 is hermetically coupled to the passive one 62 and the safety device 827 is unlocked (pin 828 retracted), in the manual opening mode, an operator can insert his/her hand into the filling machine 70, appropriately protected from the external environment through a means known to a person skilled in the art, and make the opening handle 825 of the active diaphragm 82 rotate.

Such rotation allows the sliding skid 826 present in the diaphragm 82 to be uncoupled from the corresponding seat 830 present in proximity to the door 81 of the filling machine 70, causing the "hinged" opening of the active diaphragm 82 coupled to the passive diaphragm 62 (rotation about the pin 810).

The sequence of unloading activities from the tank 60 of the filling machine 70, in the manual opening solution of the valve 62, 82, is reported below:
- coupling of the tank 60 containing sterile parts with a movement system;
- lifting of the tank 60 and docking to the filling machine 70;
- automatic locking of the flange of the tank 60 with the flange of the filling machine 70 and micro-electric activation, i.e. when pressed by the flange of the tank it closes the electric circuit which allows the activation of the vacuum system;
- activation of the vacuum which constrains the active diaphragm part 82 to the passive diaphragm part 62;
- once the envisaged vacuum has been reached, unlocking of the door opening with pneumatic piston 828 activation (see figures 28, 29 and 30);
- opening of the door (active part 82 and passive part 62 assembly) through manual rotation of the opening handle 825;
- manual connection of the unloading chute to the door 81;
- unloading valve activation with consequent unloading of material into the filling machine 70;
- after unloading, the inverse sequence is performed by detaching the empty tank from the filling machine 70.

As an additional option to the aforesaid manual activities, including the manual opening of the active diaphragm 82 as described above, there is a solution that only envisages automated activities without the intervention of an operator, comprising the automatic opening of the active diaphragm 82 through an opening means 832 (figure 34).

The sequence of unloading activities from the tank 60 of the filling machine 70, in the automatic solution comprising the opening of the valve 62, 82, is reported below:
- coupling of the tank 60 containing sterile parts with a movement system;
- lifting of the tank 60 and docking to the filling machine 70;
- automatic locking of the flange of the tank 60 with the flange of the filling machine 70 and micro-electric circuit activation, which when pressed by the flange of the tank closes the electric circuit allowing the activation of the vacuum;
- activation of the vacuum which constrains the active diaphragm part 82 to the passive diaphragm part 62;
- once the envisaged vacuum has been reached, unlocking of the door opening with pneumatic piston 828 activation (see figures 27 to 32);
- automatic opening of the door (active part 82 and passive part 62 assembly) by means of an appropriate actuator 832 (figure 34);
- automatic connection by means of an appropriate actuator of the unloading chute to the door 81;
- unloading valve activation with consequent unloading of material into the filling machine 70;
- after unloading the inverse sequence is performed by detaching the empty tank from the filling machine 70.

As a person skilled in the art can appreciate, the present invention overcomes many of the drawbacks highlighted above with reference to the prior art.

More in particular, the invention provides an active diaphragm that allows control over the effective functionality of the gasket and that, at the same time, maintains the functionalities of active diaphragms of the known type.

Preferably, the active diaphragm 52, 72, 82 is made of a stainless metal material whereas the passive diaphragm 62 is made of plastic material.

Preferably, the plastic material belongs to the family of polyaryletherketones (e.g. PAEK).

The diaphragms can be coupled to each other by exploiting the magnets housed inside them and appropriate gaskets arranged on the edge. The magnets have the dual function of obtaining the centring and adhesion between the two diaphragms. The gaskets have the function of guaranteeing the seal and thus isolating the work space from the contaminated zone between the two diaphragms. Preferably, inside the plastic material of the passive diaphragm there are one or more permanent magnets. In this way, by moving the active metal diaphragm towards the passive plastic diaphragm, the active diaphragm 52, 72, 82 and passive diaphragm 62 are centred and mutually attracted. In the event of any suction system blackouts, only the magnetic force allows the hermetic seal of the coupling of the two diaphragms.

The functionality of the magnets buried in the plastic material of the passive diaphragm allows the work cycle to be completed even if a seal problem arises on the gaskets.

A further advantage of having the passive diaphragm made of plastic material comes from the lightness and therefore the possibility to request lower suction power in order to keep it coupled to the active diaphragm.

Therefore, the seal is created with the combination of the seal of the particular geometry of the gaskets, the suction (vacuum effect) and the magnetic force of attraction between the active diaphragm and the passive one.

Furthermore, the two diaphragms or discs of the present invention are placed in contact by means of a mutual nearing movement, without this taking place following a rotation between the two diaphragms in order to obtain the seal that implies damage over time.

The potentially non-sterile zone (so-called ring of concern) is separated from the sterile zone with a seal using the elastomeric material of the gaskets, activated with "crushing" generated by the suction (or vacuum) and magnetic force. Preferably, the support surfaces 520, 720 and 820 are substantially flat.

The active diaphragm of the present invention guarantees greater efficiency and uniformity of the seal between the two diaphragms 52 and 62.

This is also possible thanks to the presence of a hollow 521 defined perimetrally by a gasket 524 and occupying almost all of the support surface. When the gasket 524 of the active diaphragm 52 rests on the abutment surface 620, the space defined within the gasket 524 by the hollow 521 and by the suction conduits 523 and 513 is separated from the environment of the conduit. The activation of the aspirator 53 implies that within such space a uniform degree of vacuum is created, so that the external pressure presses the two diaphragms 52 and 62 against each other.

A person skilled in the art will be able to make modifications and/or replacements of elements described without thereby departing from the scope of the appended claims.

## Claims

1. An active diaphragm (52; 72; 82) for an active door (51; 71; 81) adapted for the hermetic closure of a conduit, the diaphragm (52; 72; 82) defining:
- a support surface (520; 820) arranged on a plane π1;
- a geometric axis a perpendicular to the plane π1; and
- an axis of rotation r parallel to the plane π1;
the active diaphragm (52; 72; 82) comprising:
- a hollow (521; 821), completely comprised inside the support surface (520 820); and
- a suction conduit (523; 823) adapted to place in communication the hollow (521;; 821) with an aspirator (53; 83) external to the diaphragm (52; 72; 82); wherein
the axes a and r are askew with respect to each other,
the suction conduit (523) is arranged at least partially along the axis of rotation r; and
the active diaphragm has a circular shape;
**characterized in that**
said hollow (521; 821) occupies between 80% and 90% of the support surface (520; 820) of the active diaphragm (52; 72; 82).

2. The diaphragm (52; 72; 82) according to claim 1, further comprising a peripheral gasket (524; 824) adapted to define, in the non-deformed state, an axial support surface (5240; 8240) arranged on a plane π2 parallel to the plane π1 and distanced therefrom.

3. The diaphragm (52; 72; 82) according to any one of the preceding claims, comprising a peripheral gasket (524; 824) adapted to define at least one radial support surface (5241; 8241).

4. The diaphragm (52; 72; 82) according to any one of the preceding claims, wherein the suction conduit (813) is perpendicular to the plane π1.

5. The diaphragm (52; 72; 82) according to any one of the preceding claims, comprising means (522; 822) for the transmission of a torque around the axis of rotation r.

6. An active door (51; 71; 81) for the hermetic closure of a conduit, comprising a diaphragm (52; 72; 82) according to any one of claims 1 to 5, the door (51; 71; 81) further comprising:
- means (510; 810) for bearing the diaphragm (52; 72; 82) rotatably around the axis of rotation r; and
- a suction conduit (813) adapted to constitute an extension of the suction conduit (523; 823) of the diaphragm (52; 72; 82).

7. The door (51; 71; 81) according to claim 6, comprising a diaphragm (52; 72; 82) according to claim 3, wherein the door (51; 71; 81) comprises an abutment surface adapted to define at least one partially radial support for the at least partially radial support surface (5241) of the diaphragm (52; 72; 82).

8. The door (51; 71; 81) according to claim 6 or 7, comprising means (512; 812) for transmitting to the diaphragm (52; 72; 82) a torque around the axis of rotation r, the means (512; 812) of the door (51; 71; 81) being adapted to cooperate with the means (522, 822) of the diaphragm (52; 72; 82).

9. The door (51; 71; 81) according to claim 6, 7 or 8, further comprising an aspirator (53) connected to the suction conduit (813).

10. The door (51; 71; 81) according to claim 9, wherein the aspirator (53) comprises a control circuit (530; 730) adapted to measure the volume and/or flow rate of the fluid sucked by the aspirator (53) and to compare such measurements with a series of pre-loaded values.

11. An aseptic transfer system comprising:
- an active door (51; 71; 81) according to any one of claims 6 to 10 when directly or indirectly dependent on claim 2, and
- a passive door (61) adapted to be mechanically connected to the active door (51; 71; 81),
wherein the passive door (61) comprises said second diaphragm (62), said second diaphragm (62) being passive and adapted to hermetically close the passive door (61), the passive diaphragm (62) further comprising an abutment surface (620) adapted to define an axial support for the axial support surface (5240), of the gasket (524; 824) of the diaphragm (52; 72; 82) of the active door (51; 71; 81).

12. The aseptic transfer system according to claim 11, wherein the passive diaphragm (62) hermetically closes the passive door (61) by means of a peripheral gasket (629).

## Patentansprüche

1. Aktive Membran (52; 72; 82) für eine aktive Tür (51; 71; 81), die zum hermetischen Verschließen einer Leitung ausgelegt ist, wobei die Membran (52; 72; 82) definiert:
- eine Stützfläche (520; 820), die in einer Ebene π1 angeordnet ist;
- eine geometrische Achse a senkrecht zur Ebene π1; und
- eine Drehachse r parallel zur Ebene π1;
wobei die aktive Membran (52; 72; 82) umfasst:
- einen Hohlraum (521; 821), der vollständig innerhalb der Stützfläche (520, 820) enthalten ist; und
- eine Saugleitung (523; 823), die ausgelegt ist, um den Hohlraum (521; 821) mit einem Sauger (53; 83) außerhalb der Membran (52; 72; 82) in Kommunikation zu setzen; wobei die Achsen a und r schräg zueinander verlaufen, die Saugleitung (523) zumindest teilweise entlang der Drehachse r angeordnet ist, und die aktive Membran eine kreisförmige Form aufweist; **dadurch gekennzeichnet, dass** der Hohlraum (521; 821) zwischen 80 % und 90 % der Stützfläche (520; 820) der aktiven Membran (52; 72; 82) einnimmt.

2. Membran (52; 72; 82) nach Anspruch 1, ferner umfassend eine Umfangsdichtung (524; 824), die so ausgelegt ist, dass sie im nicht verformten Zustand eine axiale Stützfläche (5240; 8240) definiert, die auf einer Ebene n2 parallel zu der Ebene π1 und von dieser beabstandet angeordnet ist.

3. Membran (52; 72; 82) nach einem der vorhergehenden Ansprüche, umfassend eine Umfangsdichtung (524; 824), die ausgelegt ist, um mindestens eine radiale Stützfläche (5241; 8241) zu definieren.

4. Membran (52; 72; 82) nach einem der vorhergehenden Ansprüche, wobei die Saugleitung (813) senkrecht zu der Ebene π1 verläuft.

5. Membran (52; 72; 82) nach einem der vorhergehenden Ansprüche, umfassend Mittel (522; 822) zur Übertragung eines Drehmoments um die Drehachse r herum.

6. Aktive Tür (51; 71; 81) zum hermetischen Verschließen einer Leitung, umfassend eine Membran (52; 72; 82) nach einem der Ansprüche 1 bis 5, wobei die Tür (51; 71; 81) ferner umfasst:
- Mittel (510; 810) zum drehbaren Lagern der Membran (52; 72; 82) um die Drehachse r; und
- eine Saugleitung (813), die ausgelegt ist, um eine Verlängerung der Saugleitung (523; 823) der Membran (52; 72; 82) zu bilden.

7. Tür (51; 71; 81) nach Anspruch 6, umfassend eine Membran (52; 72; 82) nach Anspruch 3, wobei die Tür (51; 71; 81) eine Anschlagfläche umfasst, die ausgelegt ist, um mindestens eine teilweise radiale Abstützung für die mindestens teilweise radiale Stützfläche (5241) der Membran (52; 72; 82) zu definieren.

8. Tür (51; 71; 81) nach Anspruch 6 oder 7, umfassend Mittel (512; 812) zum Übertragen eines Drehmoments um die Drehachse r auf die Membran (52; 72; 82), wobei die Mittel (512; 812) der Tür (51; 71; 81) mit den Mitteln (522; 822) der Membran (52; 72; 82) zusammenwirken können.

9. Tür (51; 71; 81) nach Anspruch 6, 7 oder 8, ferner umfassend einen Sauger (53), der mit der Saugleitung (813) verbunden ist.

10. Tür (51; 71; 81) nach Anspruch 9, wobei der Sauger (53) eine Steuerschaltung (530; 730) umfasst, die so ausgelegt ist, dass sie das Volumen und/oder die Durchflussrate des von dem Sauger (53) angesaugten Fluids misst und solche Messungen mit einer Reihe von vorgeladenen Werten vergleicht.

11. Aseptisches Übertragungssystem, umfassend:
- eine aktive Tür (51; 71; 81) nach einem der Ansprüche 6 bis 10, wenn sie direkt oder indirekt von Anspruch 2 abhängt, und
- eine passive Tür (61), die ausgelegt ist, um mechanisch mit der aktiven Tür (51; 71; 81) verbunden zu werden, wobei die passive Tür (61) die zweite Membran (62) umfasst, wobei die zweite Membran (62) passiv ist und ausgelegt ist, um die passive Tür (61) hermetisch zu schließen, wobei die passive Membran (62) ferner eine Anschlagfläche (620) umfasst, die ausgelegt ist, um eine axiale Abstützung für die axiale Stützfläche (5240) der Dichtung (524; 824) der Membran (52; 72; 82) der aktiven Tür (51; 71; 81) zu definieren.

12. Aseptisches Übertragungssystem nach Anspruch 11, wobei die passive Membran (62) die passive Tür (61) mittels einer Umfangsdichtung (629) hermetisch schließt.

## Revendications

1. Diaphragme actif (52 ; 72 ; 82) pour une porte active (51 ; 71 ; 81) adaptée à la fermeture hermétique d'un conduit, le diaphragme (52 ; 72 ; 82) définissant :
- une surface de support (520 ; 820) disposée sur un plan π1 ;
- un axe géométrique a perpendiculaire au plan π1 ; et
- un axe de rotation r parallèle au plan π1 ;
le diaphragme actif (52 ; 72 ; 82) comprenant :
- un creux (521 ; 821), entièrement compris à l'intérieur de la surface de support (520, 820) ; et
- un conduit d'aspiration (523 ; 823) adapté pour mettre en communication le creux (521 ; 821) avec un aspirateur (53 ; 83) externe au diaphragme (52 ; 72 ; 82) ;
dans lequel les axes a et r sont obliques l'un par rapport à l'autre,
le conduit d'aspiration (523) est disposé au moins partiellement le long de l'axe de rotation r ; et
le diaphragme actif possède une forme circulaire ; **caractérisé en ce que** ledit creux (521 ; 821) occupe entre 80 et 90 % de la surface de support (520 ; 820) du diaphragme actif (52 ; 72 ; 82).

2. Diaphragme (52 ; 72 ; 82) selon la revendication 1, comprenant de plus un joint périphérique (524 ; 824) adapté pour définir, dans l'état non déformé, une surface de support axiale (5240 ; 8240) disposée sur un plan n2 parallèle au plan π1 et distancé de celui-ci.

3. Diaphragme (52 ; 72 ; 82) selon l'une quelconque des revendications précédentes, comprenant un joint périphérique (524 ; 824) adapté pour définir au moins une surface de support radiale (5241 ; 8241).

4. Diaphragme (52 ; 72 ; 82) selon l'une quelconque des revendications précédentes, dans lequel le conduit d'aspiration (813) est perpendiculaire au plan π1.

5. Diaphragme (52 ; 72 ; 82) selon l'une quelconque des revendications précédentes, comprenant des moyens (522 ; 822) de transmission d'un couple autour de l'axe de rotation r.

6. Porte active (51 ; 71 ; 81) pour la fermeture hermétique d'un conduit, comprenant un diaphragme (52 ; 72 ; 82) selon l'une quelconque des revendications 1 à 5, la porte (51 ; 71 ; 81) comprenant de plus :
- des moyens (510 ; 810) pour supporter le diaphragme (52 ; 72 ; 82) en rotation autour de l'axe de rotation r ; et
- un conduit d'aspiration (813) adapté pour constituer une extension du conduit d'aspiration (523 ; 823) du diaphragme (52 ; 72 ; 82).

7. Porte (51 ; 71 ; 81) selon la revendication 6, comprenant un diaphragme (52 ; 72 ; 82) selon la revendication 3, dans laquelle la porte (51 ; 71 ; 81) comprend une surface de butée adaptée pour définir au moins un support partiellement radial pour l'au moins une surface de support partiellement radiale (5241) du diaphragme (52 ; 72 ; 82).

8. Porte (51 ; 71 ; 81) selon la revendication 6 ou 7, comprenant des moyens (512 ; 812) de transmission au diaphragme (52 ; 72 ; 82) d'un couple autour de l'axe de rotation r, les moyens (512 ; 812) de la porte (51 ; 71 ; 81) étant adaptés pour coopérer avec les moyens (522 ; 822) du diaphragme (52 ; 72 ; 82).

9. Porte (51 ; 71 ; 81) selon la revendication 6, 7 ou 8, comprenant de plus un aspirateur (53) relié au conduit d'aspiration (813).

10. Porte (51 ; 71 ; 81) selon la revendication 9, dans laquelle l'aspirateur (53) comprend un circuit de commande (530 ; 730) adapté pour mesurer le volume et/ou le débit du fluide aspiré par l'aspirateur (53) et pour comparer ces mesures avec une série de valeurs préchargées.

11. Système de transfert aseptique, comprenant :
- une porte active (51 ; 71 ; 81) selon l'une quelconque des revendications 6 à 10 lorsqu'elles dépendent directement ou indirectement de la revendication 2, et
- une porte passive (61) adaptée pour être reliée mécaniquement à la porte active (51 ; 71 ; 81),
dans lequel la porte passive (61) comprend ledit deuxième diaphragme (62), ledit deuxième diaphragme (62) étant passif et adapté pour fermer hermétiquement la porte passive (61), le diaphragme passif (62) comprenant de plus une surface de butée (620) adaptée pour définir un support axial pour la surface de support axiale (5240), du joint (524 ; 824) du diaphragme (52 ; 72 ; 82) de la porte active (51 ; 71 ; 81).

12. Système de transfert aseptique selon la revendication 11, dans lequel le diaphragme passif (62) ferme hermétiquement la porte passive (61) au moyen d'un joint périphérique (629).
